# FASCICULE DE BREVET EUROPEEN

(11) **EP 2 770 438 B1**
(45) Date de publication et mention de la délivrance du brevet: **08.04.2020**
(21) Numéro de dépôt: 14155072.3
(22) Date de dépôt: 13.02.2014
(51) Int. Cl.: G06F 11/34

(54) **Surveillance de tests de performance éxécutés sur une architecture informatique**
Überwachung von Leistungtests, die in einem Computersystem ausgeführt sind
Monitoring of performance tests executed in a computer system

(30) Priorité: 22.02.2013 FR 1351561
(43) Date de publication de la demande: 27.08.2014
(73) Titulaire: BULL SAS, 78340 Les Clayes sous Bois (FR)
(72) Inventeur: Alvarez-Marcos, José-Ignacio, 69220 Saint Jean D'Ardieres (FR); Chaabane, Wajih, 73000 Chambery (FR); Menigot, Gilles, 38610 Venon (FR)
(74) Mandataire: A.P.I. Conseil

(56) Documents cités:
- WO-A1-03/005202
- WO-A2-03/014878
- US-A1- 2002 198 984
- US-B1- 7 171 338

## Description

La présente invention concerne le domaine des tests de performance d'architectures informatiques.

De telles architectures informatiques sont par exemple des applications « n-tiers » avec un serveur de présentation, un serveur métier et un serveur de persistance, des calculateurs hautes performances, généralement désignés sous leur appellation anglo-saxonne « *clusters* » HPC (HPC étant le sigle de « *High Performance Computing*»). Les infrastructures peuvent comporter un ensemble de serveurs (par exemple Web).

Les tests (ou mesures) de performance (« Benchmark » en terminologie anglo-saxonne) peuvent avoir pour objectif de résoudre des problèmes de performance se produisant uniquement en charge (c'est-à-dire en fonctionnement avec un grand nombre d'utilisateurs), de dimensionner une architecture nécessaire pour une application en fonction d'une utilisation donnée, de valider les performances, l'endurance, la robustesse d'une application, de comparer des évolutions (briques logicielles, version d'application, optimisations, etc.), ou autre.

Les applications (ou logiciels) de test de performance permettent de simuler plusieurs utilisateurs simultanément. Par exemple, pour une architecture informatique d'application Web (un réseau de serveurs Web), l'application de test est capable d'envoyer vers l'architecture un très grand nombre de requêtes (par exemple au format HTML), comme si elles provenaient d'utilisateurs simultanés différents.

Ces applications permettent de créer un ou plusieurs scénarios de test en choisissant une ou plusieurs requêtes à faire exécuter par l'architecture testée et en choisissant un débit de requêtes pour chaque scénario.

Les applications de test effectuent un certain nombre de mesures (temps de réponse de l'architecture, taux d'erreurs, ou autre) et génèrent un rapport de test.

De manière générale, un test de performance d'architecture informatique, peut se dérouler en plusieurs étapes.

Dans une première étape, la stratégie de test est définie, avec notamment :
- ladéfinition du contexte technique de l'architecture testée,
- le choix d'un ou plusieurs scénarios et la pondération de ces scénarios (c'est-à-dire la définition de l'importance relative des uns par rapport aux autres),
- la détermination de la volumétrie cible (c'est-à-dire le débit de requêtes souhaité pour le test),
- la définition de l'architecture testée,
- la définition des prérequis.

Ensuite, l'environnement du test est mis en place. Il s'agit par exemple d'appliquer une certaine configuration à l'architecture informatique testée pour pouvoir tester cette configuration en particulier.

Les scénarios de test sont ensuite capturés au moyen d'applications de test puis modifiés pour être paramétrables. Ensuite, à partir de ces définitions, les jeux d'instructions d'injection sont construits. Il s'agit de définir les paramètres des requêtes à envoyer vers l'architecture testée pour mettre en œuvre les scénarios (par exemple sous forme de fichier CSV, sigle de « Comma-separated values » , ou d'un export d'une base de données).

Pour effectuer les mesures de performance, il peut être nécessaire de développer des sondes de mesure spécifiques à une grandeur particulière.

Des scripts d'ordonnancement préexistants sont ensuite adaptés ou complétés pour exécuter de façon chronologique les tâches nécessaires à la mise en œuvre des scénarios selon les jeux d'injection.

Enfin, les tirs sont exécutés lors d'une « *campagne de test »* et les résultats sont mesurés et analysés pour générer un rapport.

Une campagne de test comporte un ensemble de tirs qui sont effectués dans une période de temps définie. Les tirs sont lancés par un ordonnanceur. Un tir peut se caractériser par un niveau d'injection et une durée ainsi qu'un ensemble d'opérations qui sont effectués durant l'injection.

Une analyse synthétique est effectuée en fin de tir à partir de laquelle sont constatés les résultats de la mesure de performance et déterminées les caractéristiques des tirs suivants.

Or, ces résultats ne peuvent être significatifs qu'à condition que les tirs se soient déroulés comme prévu.

En effet, des dérives peuvent apparaître au cours d'un tir. Ces dérives peuvent être dues à une charge d'injection trop importante, à un problème applicatif (mauvaise gestion des accès concurrent par exemple) ou à une saturation des ressources d'un ou plusieurs serveurs.

Pour s'assurer du bon déroulement d'un tir, des solutions de surveillance de l'utilisation des ressources existent (« monitoring » en terminologie anglo-saxonne).

Le document US 2002/198984 décrit un procédé de test de performance de dispositifs informatiques, où des agents installés dans des dispositifs envoient des informations d'alertes vers un serveur central.

Une application de monitoring connue est *Nmon* et fonctionne sur la plupart des systèmes d'exploitation de type Unix ou Linux.

Une des solutions connues permettant d'observer les dérives au cours d'un tir est intégrée au logiciel Nmon. Elle consiste à afficher à un utilisateur l'utilisation en temps réel des ressources des machines de l'architecture testée.

Cependant, cette solution graphique nécessite une attention de tous les instants de la part de l'utilisateur ainsi qu'une grande expertise pour interpréter en temps réel les résultats.

En outre, cette solution nécessite d'allouer des ressources graphiques spécifiques qui ne sont pas toujours disponibles dans l'architecture testée et qui peuvent avoir des impacts sur les performances de l'infrastructure testée en utilisant des ressources pour visualiser ses performances.

Il existe donc un besoin pour améliorer la surveillance des tests d'architectures informatiques.

La présente invention s'inscrit dans ce cadre. Elle décrit un procédé de surveillance de mesure de performance d'architecture informatique, comportant les étapes suivantes :
- d'installation d'au moins un programme informatique d'alerte sur au moins un dispositif de ladite architecture informatique,
- de lancement d'une mesure de performance de ladite architecture informatique,

- de vérification de présence d'au moins un fichier d'alerte, généré par un programme informatique d'alerte, auprès d'au moins un desdits au moins un dispositif,
- de premier calcul d'une tendance de comportement de ladite architecture informatique, en fonction d'au moins un desdits fichiers d'alerte, et
de génération d'un message d'alerte en fonction de ladite tendance déterminée.

En particulier, selon un **premier aspect** de l'invention concerne un procédé de test de performance d'infrastructures informatiques comportant une surveillance automatisée de mesure de performance d'architecture informatique, l'architecture informatique comprenant des dispositifs, ledit procédé comportant les étapes suivantes :
- d'installation, par un dispositif d'injection, d'au moins un programme informatique d'alerte sur des dispositifs de ladite architecture informatique ;
- de lancement d'une mesure de performance de ladite architecture informatique comprenant :
   - Une étape d'exécution du programme informatique d'alerte sur les dispositifs sur lesquels le programme informatique d'alerte a été installé, et
   - Une étape de génération d'un fichier d'alerte sur au moins un desdits dispositifs, par le programme informatique d'alerte, ledit fichier d'alerte comprenant des données concernant une tendance de comportement du dispositif,
- de vérification si une première condition de lancement de calcul de tendance de comportement de l'architecture informatique est remplie,
si la réponse est oui :
- de vérification de présence d'au moins un fichier d'alerte comportant des données concernant une tendance de comportement du dispositif, auprès des dispositifs sur lesquels a été installé le programme informatique d'alerte,
- de comparaison du nombre de fichiers d'alerte à un seuil de déclenchement de calcul de tendance de comportement de l'architecture informatique,
si le seuil de déclenchement est atteint :
- de premier calcul de la tendance de comportement de ladite architecture informatique, en fonction des données concernant une tendance de comportement du dispositif comprises dans l'au moins un fichier d'alerte présent sur les dispositifs de ladite architecture informatique, et
de génération d'un message d'alerte en fonction de ladite tendance de comportement de l'architecture informatique déterminée, pour informer un utilisateur.

Un procédé selon le premier aspect permet de suivre l'évolution d'un tir et éventuellement d'y mettre fin en cas de détection d'une anomalie. Le suivi de cette évolution est automatique et permet de s'affranchir d'un suivi par un utilisateur de l'évolution de l'utilisation des ressources.

Un tir peut ainsi être surveillé, même si il s'étale sur plusieurs jours, voire plusieurs semaines, sans nécessiter de prévoir une équipe de surveillance nombreuse.

Un procédé selon le premier aspect ne nécessite pas de ressources trop importantes ou qui ne seraient pas déjà disponibles dans les types mis en œuvre de mesures de performances déjà existants.

Par exemple, le message d'alerte comporte un rapport synthétique sur le déroulement du test. Ce rapport peut par exemple préconiser l'arrêt du test en cours en fonctions de critères définis par un utilisateur. Le message peut être transmis par courriel. Il peut cependant s'agir de tout autre type de message, par exemple une alerte sur un écran, une alerte sonore ou autre.

Un procédé selon le premier aspect permet une surveillance distribuée de la mesure de performance avec l'utilisation de programmes d'alerte présents au sein même des dispositifs de l'architecture testée.

Par exemple, l'étape de vérification de présence d'au moins un fichier d'alerte est mise en œuvre en fonction d'une première condition de premier calcul de tendance de comportement de ladite architecture informatique.

Ainsi, la surveillance peut être paramétrée à la demande en fonction de chaque tir surveillé.

La première condition peut être relative à une fréquence de lancement de ladite étape de calcul.

Ainsi, le comportement de l'architecture est vérifié de manière régulière. D'autres types de conditions peuvent être envisagés.

L'étape de premier calcul est mise en œuvre en fonction d'une deuxième condition de calcul relative à un nombre de fichiers d'alerte présents auprès de dispositifs de ladite architecture informatique.

Ainsi la détermination du comportement de l'architecture peut être lancée à condition de disposer d'un nombre suffisant de résultat de la part des dispositifs de l'architecture. On obtient ainsi des informations plus pertinentes concernant le déroulement du tir.

En outre, le comportement de l'architecture est vérifié en fonction de l'activité de celle-ci. Il est possible de tenir compte de la disponibilité des fichiers d'alerte et de leur contenu.

Le procédé peut en outre comporter une étape d'accès à un fichier de configuration stockant au moins l'un :
d'un premier paramètre relatif à ladite condition de premier calcul, d'un deuxième paramètre relatif à l'étape de génération, et
d'un troisième paramètre relatif à l'étape de calcul de tendance, et dans lequel au moins l'une des étapes de vérification, de premier calcul et de génération est mise en œuvre en fonction dudit premier, deuxième et troisième paramètre respectivement.

Ainsi, il est possible de configurer la surveillance en fonction de l'architecture testée. Il est possible de choisir sous quelles conditions lancer le calcul de tendance de comportement, les actions à entreprendre en fonction des résultats obtenus ou autre.

Par exemple, le procédé comporte en outre une étape d'arrêt de ladite mesure en cours.

Ainsi, il est possible d'économiser du temps, des ressources énergétique eV ou des ressources de calcul en ne laissant pas se dérouler une mesure de performance non satisfaisante et de régler les paramètres de celle- ci.

Le procédé peut aussi comporter en outre une étape de reprise desdites étapes de mesure et de stockage itératifs, suite à ladite étape de génération.

Ainsi, la mesure de performance peut se dérouler pas à pas en fonction de la tendance calculée.

Par exemple, ladite étape de reprise est mise en œuvre suite à la réception d'un message d'autorisation de reprise.

L'autorisation peut provenir d'un utilisateur ou d'un module automatique.

Un **deuxième aspect** de l'invention concerne un procédé de génération de fichier d'alerte par un dispositif d'architecture informatique. Cet aspect concerne aussi un programme informatique d'alerte comportant des instructions pour la mise en œuvre d'un tel procédé lorsqu'il est exécuté par un dispositif d'architecture informatique.

Un procédé selon le deuxième aspect comporte les étapes suivantes :
- lecture et de stockage itératifs d'au moins un résultat de mesure relatif à au moins une requête exécutée par ledit dispositif au cours de ladite mesure de performance lancée à partir d'un fichier de résultat de mesure,
- vérification d'une condition de calcul de tendance de comportement dudit dispositif,
- calcul d'une tendance de comportement dudit dispositif, en fonction d'au moins un résultat de mesure issu d'itérations, précédant la réalisation de ladite condition de calcul de tendance de comportement dudit dispositif, desdites étapes de lecture et de stockage, et
- génération d'un fichier d'alerte en fonction de ladite tendance de comportement du dispositif déterminée.

Un procédé selon le deuxième aspect permet une surveillance locale des dispositifs de l'architecture informatique testée. La surveillance locale permet de fournir à un dispositif de surveillance général des données permettant de déterminer une tendance de comportement globale de l'architecture.

La surveillance locale permet d'obtenir des résultats plus pertinents et des traitements localisés de ces résultats permettant de décharger le dispositif mettant en œuvre la surveillance globale.

Par exemple, ladite condition de calcul de tendance de comportement dudit dispositif est relative à une fréquence de lancement de ladite étape de calcul d'une tendance de comportement dudit dispositif.

Cette fréquence peut être synchronisée avec la mise en œuvre d'un procédé selon le premier aspect. Ainsi, les fichiers d'alerte générés le sont à temps pour un traitement selon le premier aspect.

Par exemple, ladite condition de calcul de tendance de comportement dudit dispositif est relative à un nombre de résultats de mesure lus et stockés.

De préférence, le procédé comporte en outre une étape de détermination d'un dépassement de valeurs seuil par les mesures obtenues du fichier de résultats de mesure. De préférence, le procédé comporte en outre une étape de mise à jour de la condition de lancement de calcul de tendance de comportement de l'architecture informatique.

Ledit calcul de tendance de comportement du dispositif peut comporter la comparaison dudit au moins un résultat de mesure à un seuil de détermination de tendance.

Ledit seuil de détermination de tendance peut être relatif à un nombre de messages d'erreur contenus dans au moins un résultat de mesure issu desdites itérations.

Les procédés selon les premier et deuxième aspects peuvent être combinés dans un même procédé général.

Un troisième aspect de l'invention concerne un programme d'ordinateur ainsi qu'un produit programme d'ordinateur et un support de stockage pour de tels programme et produit, permettant la mise en œuvre d'un procédé selon le premier et/ou le deuxième aspect de l'invention, lorsque le programme est stocké dans une mémoire d'un dispositif de surveillance de mesure de test de performance et/ou d'un dispositif d'architecture informatique et exécuté par un processeur d'un tel dispositif.

Un **quatrième aspect** de l'invention concerne un dispositif de surveillance de mesure de performance d'architecture informatique, configuré pour la mise en œuvre d'un procédé selon le premier aspect.

En particulier, selon un quatrième aspect, l'invention concerne un dispositif de test de performance d'infrastructures informatiques comportant une surveillance automatisée de mesure de performance d'architecture informatique, l'architecture informatique comprenant des dispositifs et comportant une unité de traitement configurée pour :
- Installer au moins un programme informatique d'alerte sur des dispositifs de ladite architecture informatique,
- Lancer une mesure de performance de ladite architecture informatique, comprenant :
   - l'exécution du programme informatique d'alerte sur les dispositifs sur lesquels le programme informatique d'alerte a été installé, et
   - une génération d'un fichier d'alerte sur au moins un desdits dispositifs, par le programme informatique d'alerte, ledit fichier d'alerte comprenant des données concernant une tendance de comportement dudit dispositif,
- Vérifier si une première condition de lancement de calcul de tendance de comportement de l'architecture informatique est remplie,
et si la réponse est oui :
- Vérifier la présence d'au moins un fichier d'alerte comportant des données concernant une tendance de comportement du dispositif, auprès des dispositifs sur lesquels a été installé le programme informatique d'alerte,
- Comparer le nombre de ficher d'alerte à un seuil de déclenchement de calcul de tendance de comportement de l'architecture informatique,
si le seuil de déclenchement est atteint :
- Effectuer un premier calcul de la tendance de comportement de ladite architecture informatique, en fonction des données concernant une tendance de comportement du dispositif comprises dans l'au moins un desdits fichiers d'alerte présent sur les dispositifs de ladite architecture informatique, et
- Générer un message d'alerte en fonction de ladite tendance de comportement de l'architecture informatique déterminée, pour informer un utilisateur.

Par exemple, le dispositif comporte une unité de traitement configurée pour installer au moins un programme informatique d'alerte sur au moins un dispositif de ladite architecture informatique, lancer une mesure de performance de ladite architecture informatique, vérifier la présence d'au moins un fichier d'alerte, généré par un programme informatique d'alerte, auprès d'au moins desdits au moins un dispositif, effectuer un premier calcul d'une tendance de comportement de ladite architecture informatique, en fonction d'au moins un desdits fichiers d'alerte, et générer un message d'alerte en fonction de ladite tendance déterminée.

L'invention décrit également un dispositif d'architecture informatique pour la mise en œuvre d'un procédé selon le deuxième aspect.

Par exemple un tel dispositif comporte une unité de traitement configurée pour mettre en œuvre les étapes suivantes de :
- lecture et de stockage itératifs d'au moins un résultat de mesure relatif à au moins une requête exécutée par ledit dispositif au cours de ladite mesure de performance lancée à partir d'un fichier de résultat de mesure,
- vérification d'une troisième condition de calcul de tendance de comportement dudit dispositif,
- deuxième calcul d'une tendance de comportement dudit dispositif, en fonction d'au moins un résultat de mesure issu d'itérations, précédant la réalisation de ladite troisième condition, desdites étapes de lecture et de stockage, et
- génération d'un fichier d'alerte en fonction de ladite tendance déterminée.

Un **autre aspect** de l'invention concerne un système de test de performance d'infrastructures informatiques comportant une surveillance automatisée de mesure de performance d'architecture informatique comportant un dispositif selon l'invention et au moins un dispositif d'architecture informatique comportant une unité de traitement configurée pour exécuter ledit programme informatique et mettre en œuvre les étapes suivantes de :
- lecture et de stockage itératifs d'au moins un résultat de mesure relatif à au moins une requête exécutée par ledit dispositif au cours de ladite mesure de performance lancée à partir d'un fichier de résultat de mesure,
- vérification d'une condition de calcul de tendance de comportement dudit dispositif,
- calcul d'une tendance de comportement dudit dispositif, en fonction d'au moins un résultat de mesure issu d'itérations, précédant la réalisation de ladite condition de calcul de tendance de comportement dudit dispositif, desdites étapes de lecture et de stockage, et
- génération d'un fichier d'alerte en fonction de ladite tendance de comportement du dispositif déterminée.

D'autres caractéristiques et avantages de l'invention apparaîtront à la lecture de la présente description détaillée qui suit, à titre d'exemple non limitatif, et des figures annexées parmi lesquelles :
la **figure 1** illustre un contexte général de mise en œuvre de modes de réalisation ;
les **figures *2*** et 3 sont des organigrammes d'étapes mises en œuvre selon des modes de réalisation ; et
la **figure *3*** illustre schématiquement un dispositif selon des modes de réalisation de l'invention.

Dans la description qui suit, il est présenté un outil pour surveiller le déroulement d'un « tir » d'une application de test d'architecture informatique.

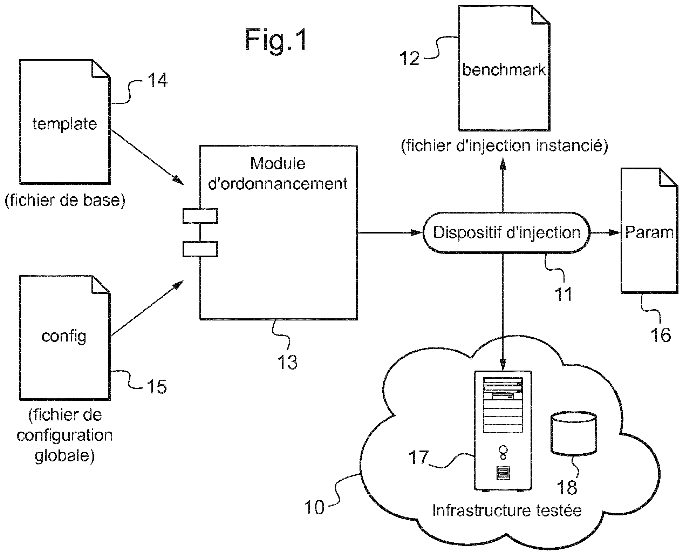

La **figure 1** illustre un contexte général de mise en œuvre de modes de réalisation d'une surveillance de mesure de performance.

Une architecture informatique 10, qui met en œuvre une ou plusieurs applications logicielles est testée. Il est possible d'envisager d'autres architectures informatiques.

A cet effet, un dispositif d'injection 11, mettant en œuvre une application de test, envoie vers l'architecture 10 un ensemble de requêtes (« tir ») que l'architecture exécute. Le dispositif reçoit par ailleurs de l'architecture des résultats d'exécution de ces requêtes et des données de mesure de performance.

Pour exécuter le tir, le dispositif d'injection reçoit ou lit un fichier d'injection instancié 12 « *benchmark* »*.* Ce fichier d'injection est généré par un module d'ordonnancement 13. Ce module d'ordonnancement peut faire partie du dispositif d'injection ou faire partie d'un autre dispositif spécifiquement dédié à la génération du fichier d'injection 12.

Pour générer le fichier d'injection 12, le module d'ordonnancement utilise un fichier de base 14 « *template* » et un fichier de configuration 15 « *config ».*

Le module d'ordonnancement exécute un script d'ordonnancement, par exemple écrit en langage Bash, qui automatise les tâches liées à la mesure de performance (Benchmark) d'une application informatique. Ce script peut comporter une ou plusieurs des étapes suivantes, implémentées sous forme de fonctions, notamment :
- configurer le module d'injection pour exécuter le tir,
- rediriger les requêtes vers les éléments (matériels ou logiciels) de l'architecture),
- copier, ou calculer, les paramètres d'injection dans le fichier d'injection,
- arrêter les sondes de mesure,
- arrêter les services de l'architecture informatique,
- démarrer les services de l'architecture informatique,
- démarrer les sondes de mesure,
- injecter les requêtes vers l'architecture informatique,
- arrêter les services,
- arrêter les sondes,
- collecter les données de mesure,
- démarrer les services,
- analyser les données de mesure,
- archiver les données de mesure.

L'étape « injecter » appelle l'exécution du fichier d'injection par le dispositif d'injection.

L'étape « copier » consiste à calculer les paramètres nécessaires à la génération du fichier d'injection.

Lors de cette étape, le module d'ordonnancement lit le fichier de configuration 15 et prépare le fichier d'injection 12 à destination du dispositif d'injection. Pour chaque scénario dans le fichier de configuration, des variables d'injection sont calculées afin de les intégrer au fichier d'injection et permettre au dispositif d'injection de cadencer les instructions envoyées vers l'architecture informatique testée.

Lors de la compagne de tir, les dispositifs 17 de l'architecture informatique peuvent générer des résultats de mesure. Il s'agit par exemple du temps de réponse moyen du dispositif en fonction de chaque type de requête envoyée, l'écart-type des temps de réponse, le temps maximum, le temps minimum, les déciles, le nombre de requêtes traitées, le nombre de requêtes en échec, des messages d'erreur, ou autre.

Ces résultats sont stockés au fur et à mesure dans des fichiers de résultat de mesure respectifs dans des mémoires 18 respectivement associées aux dispositifs 17.

Afin de surveiller le déroulement du tir, le dispositif d'injection installe sur au moins un dispositif 17, un programme informatique d'alerte. Le programme informatique d'alerte est par exemple stocké dans la mémoire 18 associée au dispositif.

Le programme informatique d'alerte comporte des instructions pour la mise en œuvre d'un procédé de génération d'un fichier d'alerte. Un fichier d'alerte comporte des données concernant une tendance de comportement du dispositif lors de la mesure de performance de l'architecture informatique.

A partir des fichiers d'alerte provenant de dispositifs de l'architecture, le dispositif d'injection peut établir une tendance de comportement de l'architecture complète.

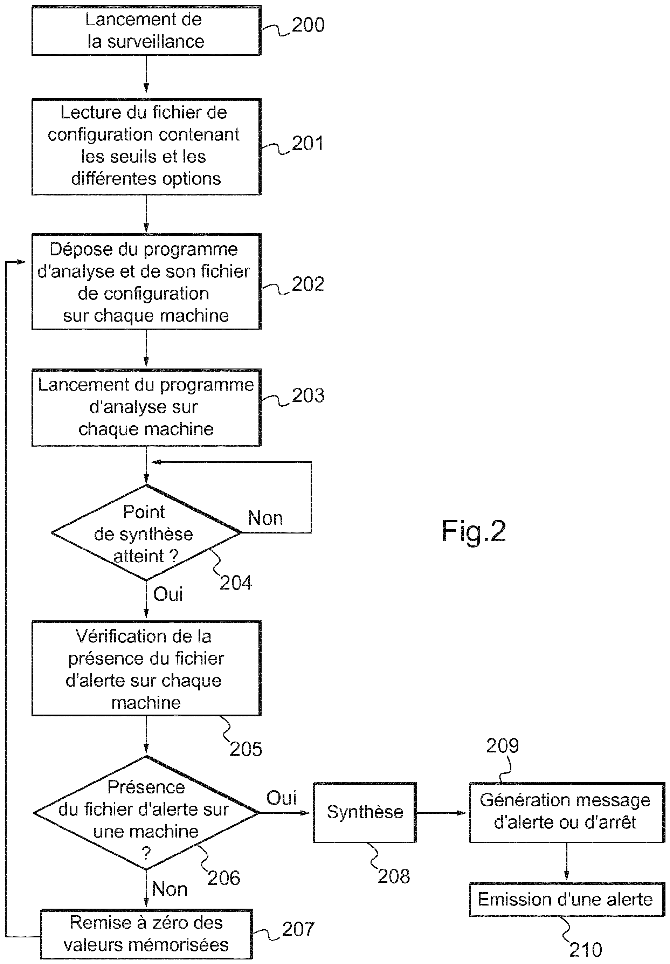

Des étapes d'un procédé de surveillance selon des modes de réalisation sont présentées en référence à l'organigramme de la **Figure** 2. Ces étapes sont par exemple mises en œuvre par un dispositif d'injection.

Lors d'une première étape 200, il est procédé au lancement de la surveillance d'un tir menée pour tester une architecture informatique. La surveillance peut être lancée consécutivement au lancement du tir. La surveillance peut également être lancée antérieurement au lancement du tir. La surveillance ne débute toutefois que lorsque que le tir est en cours.

Ensuite, lors d'une étape 201, différents paramètres de mise en œuvre de la surveillance sont obtenus. Par exemple, il est accédé à un fichier de configuration de surveillance du tir (non représenté). Ces paramètres peuvent notamment concerner une condition de lancement de calcul de tendance de comportement (par exemple une fréquence de lancement de calcul), une indication concernant une action à entreprendre suite au calcul de la tendance de comportement (par exemple générer un message d'alerte) ou un paramètre relatif à ce calcul (par exemple des seuils de dépassement d'un comportement acceptable). D'autres indications ou paramètres peuvent être obtenus, par exemple dans le fichier de configuration de surveillance.

Une fois la surveillance du tir lancée et configurée, Un programme informatique d'alerte est déposé dans au moins un dispositif de l'architecture informatique lors d'une étape 202. Cette étape permet l'installation du programme informatique pour son exécution lors du tir par le dispositif dans lequel il est déposé.

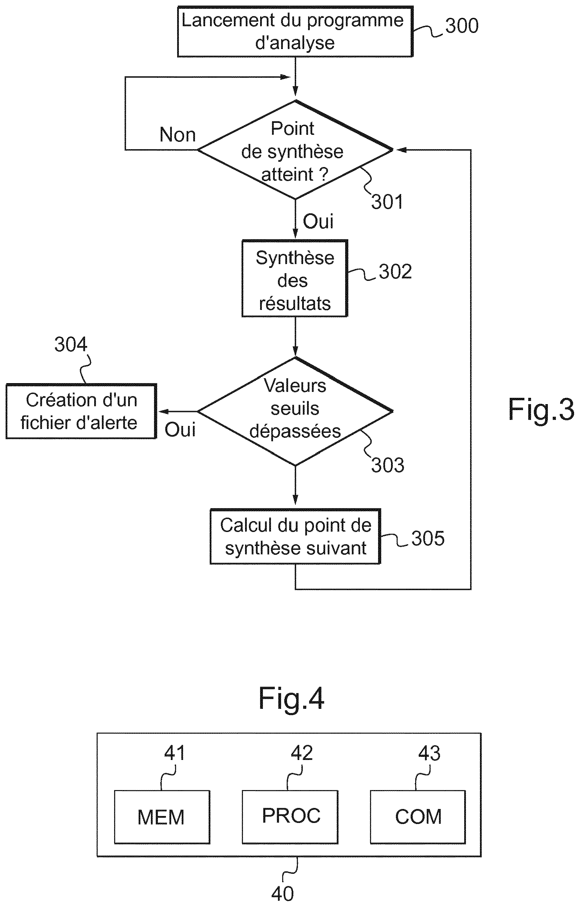

La mesure de performance est ensuite lancée lors de l'étape 203. En particulier, l'exécution du programme informatique d'alerte est ensuite lancée sur les dispositifs dans lesquels il a été installé. Par exemple un message de lancement est transmis aux dispositifs. L'exécution du programme informatique d'alerte est décrite plus loin en référence à la figure 3.

Les fichiers d'alerte générés par les programmes informatiques d'alerte peuvent ne pas être disponibles au même moment. En outre, le dispositif d'injection peut avoir besoin d'un nombre significatif de fichiers d'alerte pour déterminer la tendance de comportement globale de l'architecture. Par exemple, il peut être besoin de disposer d'au moins un fichier d'alerte correspondant à des parties spécifiques de l'architecture avant de pouvoir en connaître la tendance de comportement globale.

Ainsi, il est testé lors d'une l'étape 204 si une condition de lancement de calcul de tendance de comportement de l'architecture est remplie. Par exemple, ce calcul peut être lancé à intervalles réguliers durant le tir. Ainsi, la condition à tester peut résider dans la vérification que le temps écoulé depuis le dernier calcul correspond à la fréquence de lancement. D'autres conditions de lancement de calcul peuvent être envisagées.

Si la condition de lancement de calcul n'est pas satisfaite, c'est-à-dire que le point de synthèse n'est pas atteint (non), le processus reboucle jusqu'à satisfaction de la condition.

Dans ce cas (oui), il est procédé, lors d'une étape 205, à une vérification de présence de fichiers d'alerte auprès des dispositifs sur lesquels ont été installés les programmes informatiques d'alerte.

Le nombre de fichiers d'alerte est ensuite comparé lors de l'étape 206 à un seuil de déclenchement de calcul de tendance de comportement de l'architecture. Si le seuil n'est pas atteint (non), il est déterminé lors de l'étape 207 le point de synthèse suivant (par exemple la date de lancement du prochain calcul en fonction de la fréquence de lancement). Le processus retourne alors à l'étape 204.

Lors de l'étape 207, il est possible de mettre à jour la condition à satisfaire lors du test de l'étape 204, afin de gérer dynamiquement les lancements de calcul de tendance de comportement.

Par exemple, si le test de l'étape 204 est satisfait un grand nombre de fois sans que le nombre de fichiers d'alerte requis pour le calcul soit atteint, un test moins restrictif peut être défini. Par exemple, la fréquence de lancement peut être réduite. Dans cet exemple, a contrario, lorsque le nombre de fichiers d'alerte est trop important lorsque la condition de l'étape 204 est satisfaite, cette condition peut être rendue plus restrictive lors de l'étape 207. En effet, si les fichiers d'alerte sont en trop grand nombre, le calcul de tendance de comportement peut s'en retrouver plus complexe et plus lent.

De retour à l'étape 206, si le nombre de fichiers d'alerte requis est atteint (oui), une étape 208 de synthèse des résultats contenus dans les fichiers d'alerte est mise en œuvre. L'étape 208 peut être accompagnée d'un affichage de graphiques pour l'utilisateur.

Lorsque que les résultats de mesure sont traités, le calcul de tendance de comportement est lancé. Par exemple, il s'agit de déterminer lors d'une étape 209 si des valeurs de seuil (par exemple issues du fichier de configuration de surveillance) sont dépassées par les mesures obtenues des fichiers d'alerte. Il peut par exemple s'agir de déterminer si le temps de réponse moyen des dispositifs de l'architecture informatique testée est supérieur à un temps de réponse nominal.

Si les valeurs de seuil sont dépassées, il en est déduit que l'architecture informatique à tendance à s'écarter du comportement attendu lors du tir. Ainsi, il est généré lors d'une étape 210 un message d'alerte pour informer l'utilisateur de cet écart. Par exemple, un message est affiché dans une interface graphique lors d'une étape 21O. Alternativement, le message généré peut être un message d'arrêt visant à stopper le tir. Dans ce cas, une étape d'arrêt de la mesure de performance est mise en œuvre, avec notamment l'envoi de messages d'arrêt à destination des dispositifs de l'architecture mettant en œuvre les programmes informatiques d'alerte.

Une fois les étapes 209 et 210 exécutées, le processus peut reprendre à l'étape 204 sans condition. Toutefois, il est possible de conditionner cette reprise à un critère de reprise. Par exemple, li s'agit de se mettre en attente de la réception d'un message d'autorisation de reprise. Ce message d'autorisation de reprise peut par exemple provenir d'un utilisateur. Ce message peut aussi provenir d'un module d'autorisation chargé d'analyser la ou les causes qui ont conduit au message d'alerte ou à l'arrêt du tir. Par exemple, ce module opère une analyse d'alertes précédentes et des actions qui ont été entreprises par la suite. Une série d'autorisations peut également être prévue en cas d'alertes prévisibles. Cette série d'autorisations peut être stockée auprès de ce module d'autorisation. Par exemple, le module d'autorisation intervient dans un premier temps et l'utilisateur est sollicité en dernier recours pour décider de reprendre ou non le processus de surveillance.

L'exécution d'un programme informatique d'alerte est décrite en référence à l'organigramme de la **figure** 3. Les étapes de cet organigramme sont par exemple mises en œuvre par un dispositif de l'architecture informatique ou un module dédié et associé à celui-ci.

Lors d'une première étape 300, il est procédé au lancement du programme informatique d'alerte déposé par le dispositif de d'injection lors de l'étape 203. Ce lancement est par exemple opéré par réception d'un message de lancement. Ce message peut être reçu de la part du dispositif d'injection. Par exemple, le message est émis lors de l'étape 203 décrite en référence à la figure 2.

Ensuite, il est testé lors de l'étape 301 si une condition de lancement de calcul de tendance de comportement du dispositif est remplie.

Par exemple, ce calcul peut être lancé à intervalles réguliers durant le tir. Ainsi, la condition à tester peut résider dans la vérification que le temps écoulé depuis le dernier calcul correspond à la fréquence de lancement. D'autres conditions de lancement de calcul peuvent être envisagées. Par exemple, il peut s'agir de compter le nombre de résultats de mesure lus dans un fichier de résultats de mesure global associé au dispositif. Ainsi, dans ce cas, la condition à vérifier peut résider dans la vérification du nombre de résultats de mesure lus depuis le lancement du dernier calcul.

Le test de l'étape 301 peut être synchronisé à celui de l'étape 204 afin que les fichiers d'alerte générés par le programme informatique d'alerte soient disponibles lorsque la condition de l'étape 204 est satisfaite. Par exemple, dans l'exemple des fréquences de lancement, les fréquences peuvent être les mêmes dans les deux processus.

Si la condition de lancement de calcul n'est pas satisfaite, c'est-à-dire que le point de synthèse n'est pas atteint (NON), le processus reboucle sur le test 301 jusqu'à ce qu'il soit satisfait.

Si au contraire la condition de lancement de calcul est satisfaite (OUI), il est procédé, lors d'une étape de synthèse 302, à une mise en forme des derniers résultats lus et stockés en vue de les préparer pour le calcul de tendance de comportement. L'étape 302 peut être accompagnée d'un affichage de graphiques pour l'utilisateur.

Lorsque que les résultats de mesure sont traités, le calcul de tendance de comportement du dispositif est lancé. Par exemple, il s'agit de déterminer, lors d'une étape 303, si des valeurs de seuil (par exemple issues du fichier de configuration de surveillance) sont dépassées par les mesures obtenues du fichier de résultats de mesure. Il peut par exemple s'agir de déterminer si le temps de réponse moyen de l'architecture informatique testée est supérieur à un temps de réponse nominal.

Si les valeurs de seuil sont dépassées, il en est déduit que le dispositif à tendance à s'écarter du comportement attendu lors du tir. Ainsi, il est généré lors d'une étape 304 un fichier d'alerte comportant des informations relatives à cet écart.

Si au contraire lors de l'étape 303, les valeurs de seuil ne sont pas dépassées, il est déterminé lors de l'étape 305 le point de synthèse suivant (par exemple la date de lancement du prochain calcul en fonction de la fréquence de lancement). Le processus retourne alors à l'étape 301 pour vérifier que la nouvelle condition est vérifiée.

Un dispositif de selon des modes de réalisation, par exemple un dispositif d'injection, est décrit en référence à la **figure 4****.**

Le dispositif 40 de la figure 4 comporte une unité de mémoire 41 (MEM). Cette unité de mémoire comporte une mémoire vive pour stocker de manière non durable des données de calcul utilisées lors de la mise en œuvre d'un procédé conforme à l'invention, selon divers modes de réalisation. L'unité de mémoire comporte par ailleurs une mémoire non volatile (par exemple du type EEPROM) pour stocker par exemple un programme d'ordinateur, selon un mode de réalisation, pour son exécution par un processeur (non représenté) d'une unité de traitement 42 (PROC) du dispositif. Par exemple, l'unité de mémoire peut stocker un fichier de base « *template* », un fichier d'injection, ou un fichier de configuration de surveillance du tir comme décrit précédemment. Elle peut aussi stocker un fichier de paramètres de surveillance.

Le dispositif comporte par ailleurs une unité de communication 43 (COM), par exemple pour recevoir des fichiers d'injection et/ou des résultats de mesure de performance, et/ou pour envoyer des requêtes vers une architecture informatique à tester et/ou pour émettre des alertes et/ou déposer des programmes informatique d'alerte.

Un dispositif d'architecture informatique, configurer pour exécuter un programme informatique d'alerte peut comporter des éléments équivalents à ceux présentés ci-dessus.

La présente invention a été décrite et illustrée dans la présente description détaillée en référence aux figures jointes. Toutefois la présente invention ne se limite pas aux formes de réalisation présentées. D'autres variantes et modes de réalisation peuvent être déduits et mis en œuvre par la personne du métier à la lecture de la présente description et des figures annexées.

Dans les revendications, le terme "comporter" n'exclut pas d'autres éléments ou d'autres étapes. L'article indéfini « un » n'exclut pas le pluriel. Un seul processeur ou plusieurs autres unités peuvent être utilisées pour mettre en œuvre l'invention. Les différentes caractéristiques présentées et/ou revendiquées peuvent être avantageusement combinées. Leur présence dans la description ou dans des revendications dépendantes différentes, n'exclut pas en effet la possibilité de les combiner. Les signes de référence ne sauraient être compris comme limitant la portée de l'invention.

## Revendications

1. Procédé de test de performance d'infrastructures informatiques comportant une surveillance automatisée de mesure de performance d'architecture informatique (10), l'architecture informatique (10) comprenant des dispositifs (17), ledit procédé comportant les étapes suivantes :
- d'installation (202), par un dispositif d'injection, d'au moins un programme informatique d'alerte sur des dispositifs (17) de ladite architecture informatique (10) ;
- de lancement d'une mesure de performance de ladite architecture informatique (10) comprenant :
- Une étape d'exécution (203) du programme informatique d'alerte sur les dispositifs (17) sur lesquels le programme informatique d'alerte a été installé, et
- Une étape de génération d'un fichier d'alerte sur au moins un desdits dispositifs (17), par le programme informatique d'alerte, ledit fichier d'alerte comprenant des données concernant une tendance de comportement du dispositif (17),
- de vérification (204) si une première condition de lancement de calcul de tendance de comportement de l'architecture informatique (10) est remplie,
si la réponse est oui :
- de vérification (205) de présence d'au moins un fichier d'alerte comportant des données concernant une tendance de comportement du dispositif, auprès des dispositifs (17) sur lesquels a été installé le programme informatique d'alerte,
- comparaison (206) du nombre de fichiers d'alerte à un seuil de déclenchement de calcul de tendance de comportement de l'architecture informatique (10),
si le seuil de déclenchement est atteint :
- de premier calcul (208) de la tendance de comportement de ladite architecture informatique (10), en fonction des données concernant une tendance de comportement du dispositif (17) comprises dans l'au moins un fichier d'alerte présent sur les dispositifs (17) de ladite architecture informatique (10), et
- de génération (209) d'un message d'alerte en fonction de ladite tendance de comportement de l'architecture informatique (10) déterminée, pour informer un utilisateur.

2. Procédé selon la revendication 1, dans lequel ladite première condition de lancement de calcul de tendance de comportement de l'architecture est relative à une fréquence de lancement de ladite étape de premier calcul (208).

3. Procédé selon l'une des revendications précédentes, comportant en outre une étape d'arrêt de ladite mesure de performance en cours, ladite étape d'arrêt comportant l'envoi de messages d'arrêt à destination des dispositifs (17) de l'architecture informatique (10) mettant en œuvre les programmes informatiques d'alerte.

4. Procédé selon l'une des revendications précédentes, dans lequel ledit programme informatique d'alerte comporte des instructions pour la mise en œuvre des étapes suivantes, lorsqu'il est exécuté par un dispositif (17) de ladite architecture informatique (10) :
- lecture et de stockage itératifs d'au moins un résultat de mesure relatif à au moins une requête exécutée par ledit dispositif (17) au cours de ladite mesure de performance lancée à partir d'un fichier de résultat de mesure,
- vérification d'une condition (301) de calcul de tendance de comportement dudit dispositif,
- calcul (302) d'une tendance de comportement dudit dispositif, en fonction d'au moins un résultat de mesure issu d'itérations, précédant la réalisation de ladite condition (301) de calcul de tendance de comportement dudit dispositif, desdites étapes de lecture et de stockage, et
- génération (304) d'un fichier d'alerte en fonction de ladite tendance de comportement du dispositif déterminée.

5. Procédé selon la revendication 4, dans lequel ladite condition de calcul de tendance de comportement dudit dispositif est relative à une fréquence de lancement de ladite étape de calcul (302) d'une tendance de comportement dudit dispositif.

6. Procédé selon la revendication 4, dans lequel ladite condition de calcul de tendance de comportement dudit dispositif est relative à un nombre de résultats de mesure lus et stockés.

7. Procédé selon l'une des revendications 4 à 6, comportant en outre une étape (303) de détermination d'un dépassement de valeurs seuil par les mesures obtenues du fichier de résultats de mesure.

8. Procédé selon l'une des revendications précédentes, comportant en outre une étape de mise à jour (207) de la condition de lancement de calcul de tendance de comportement de l'architecture informatique.

9. Procédé selon l'une des revendications 4 à 8, dans lequel ledit calcul (302) de tendance de comportement du dispositif comporte la comparaison dudit au moins un résultat de mesure à un seuil de détermination de tendance.

10. Procédé selon la revendication 9, dans lequel ledit seuil de détermination de tendance est relatif à un nombre de messages d'erreur contenus dans au moins un résultat de mesure issu desdites itérations.

11. Procédé selon l'une des revendications précédentes, dans lequel la vérification de la première condition de lancement de calcul de tendance de comportement de l'architecture est lancée à intervalles réguliers durant le procédé de test.

12. Procédé selon l'une des revendications précédentes, si la première condition de lancement de calcul de tendance de comportement de l'architecture n'est pas remplie, le procédé reboucle jusqu'à satisfaction de la condition.

13. Procédé selon l'une des revendications 4 à 12, **caractérisée en ce que** l'au moins un résultat de mesure peut être sélectionné parmi : temps de réponse moyen du dispositif en fonction de chaque type de requête envoyée, l'écart-type des temps de réponse, le temps maximum, le temps minimum, les déciles, le nombre de requêtes traitées, le nombre de requêtes en échec, et le nombre de messages d'erreur.

14. Dispositif (40) de test de performance d'infrastructures informatiques comportant une surveillance automatisée de mesure de performance d'architecture informatique (10), l'architecture informatique comprenant des dispositifs (17) et comportant une unité de traitement (42) configurée pour
- Installer au moins un programme informatique d'alerte sur des dispositifs (17) de ladite architecture informatique (10),
- Lancer une mesure de performance de ladite architecture informatique (10), comprenant :
- l'exécution du programme informatique d'alerte sur les dispositifs (17) sur lesquels le programme informatique d'alerte a été installé, et
- une génération d'un fichier d'alerte sur au moins un desdits dispositifs (17), par le programme informatique d'alerte, ledit fichier d'alerte comprenant des données concernant une tendance de comportement dudit dispositif (17),
- Vérifier (204) si une première condition de lancement de calcul de tendance de comportement de l'architecture informatique (10) est remplie,
et si la réponse est oui :
- Vérifier la présence d'au moins un fichier d'alerte comportant des données concernant une tendance de comportement du dispositif, auprès des dispositifs (17) sur lesquels a été installé le programme informatique d'alerte,
- Comparer le nombre de ficher d'alerte à un seuil de déclenchement de calcul de tendance de comportement de l'architecture informatique (10),
si le seuil de déclenchement est atteint :
- Effectuer un premier calcul de la tendance de comportement de ladite architecture informatique (10), en fonction des données concernant une tendance de comportement du dispositif (17) comprises dans l'au moins un desdits fichiers d'alerte présent sur les dispositifs (17) de ladite architecture informatique, et
- Générer un message d'alerte en fonction de ladite tendance de comportement de l'architecture informatique (10) déterminée, pour informer un utilisateur.

15. Système de test de performance d'infrastructures informatiques comportant une surveillance automatisée de mesure de performance d'architecture informatique comportant un dispositif selon la revendication 14 et au moins un dispositif (17) d'architecture informatique comportant une unité de traitement configurée pour exécuter ledit programme informatique et mettre en œuvre les étapes suivantes de:
- lecture et de stockage itératifs d'au moins un résultat de mesure relatif à au moins une requête exécutée par ledit dispositif au cours de ladite mesure de performance lancée à partir d'un fichier de résultat de mesure,
- vérification d'une condition de calcul de tendance de comportement dudit dispositif,
- calcul d'une tendance de comportement dudit dispositif, en fonction d'au moins un résultat de mesure issu d'itérations, précédant la réalisation de ladite condition de calcul de tendance de comportement dudit dispositif, desdites étapes de lecture et de stockage, et
- génération d'un fichier d'alerte en fonction de ladite tendance de comportement du dispositif déterminée.

## Patentansprüche

1. Verfahren zur Leistungsprüfung von IT-Infrastrukturen, umfassend eine automatisierte Überwachung der Leistungsmessung der IT-Architektur (10), wobei die IT-Architektur (10) Vorrichtungen (17) umfasst, wobei das Verfahren die folgenden Schritte umfasst:
- Installieren (202) durch eine Injektionsvorrichtung mindestens eines Warncomputerprogramms auf Vorrichtungen (17) der IT-Architektur (10);
- Starten einer Messung der Leistung der IT-Architektur (10), umfassend:
- einen Schritt des Ausführens (203) des Warncomputerprogramms auf den Vorrichtungen (17), auf denen das Warncomputerprogramm installiert wurde, und
- einen Schritt des Erzeugens einer Warndatei auf zumindest einer der Vorrichtungen (17) durch das Warncomputerprogramm, wobei die Warndatei Daten in Bezug auf einen Trend des Verhaltens der Vorrichtung (17) umfasst,
- Überprüfen (204), ob eine erste Bedingung für das Starten der Berechnung des Verhaltenstrends der IT-Architektur (10) erfüllt ist,
wenn die Antwort Ja lautet:
- Überprüfen (205) des Vorhandenseins von mindestens einer Warndatei, die Daten in Bezug auf einen Trend des Verhaltens der Vorrichtung umfasst, bei Vorrichtungen (17), auf denen das Warncomputerprogramm installiert wurde,
- Vergleichen (206) der Anzahl der Warndateien mit einem Auslöseschwellenwert für die Berechnung des Verhaltenstrends der IT-Architektur (10),
wenn der Auslöseschwellenwert erreicht ist:
- erstes Berechnen (208) des Verhaltenstrends der IT-Architektur (10) in Abhängigkeit von den Daten in Bezug auf einen Trend des Verhaltens der Vorrichtung (17), die in der mindestens einen Warndatei enthalten sind, die auf den Vorrichtungen (17) der IT-Architektur (10) vorhanden ist, und
- Erzeugen (209) einer Warnmeldung in Abhängigkeit von dem ermittelten Trend des Verhaltens der IT Architektur (10), um einen Benutzer zu informieren.

2. Verfahren nach Anspruch 1, wobei die erste Bedingung für das Starten der Berechnung des Verhaltenstrends der Architektur eine Frequenz des Startens des Schrittes der ersten Berechnung (208) betrifft.

3. Verfahren nach einem der vorstehenden Ansprüche, das ferner einen Schritt des Anhaltens der laufenden Leistungsmessung umfasst, wobei der Schritt des Anhaltens das Senden von Stoppmeldungen an die Vorrichtungen (17) der IT-Architektur (10) umfasst, das die Warncomputerprogramme implementiert.

4. Verfahren nach einem der vorstehenden Ansprüche, wobei das Warncomputerprogramm Anweisungen für die Durchführung der folgenden Schritte umfasst, wenn es durch eine Vorrichtung (17) der IT-Architektur (10) ausgeführt wird:
- iteratives Lesen und Speichern von zumindest einem Messergebnis in Bezug auf mindestens eine von der Vorrichtung (17) ausgeführte Anfrage während der Leistungsmessung, die von einer Messergebnisdatei aus gestartet wird,
- Überprüfen einer Bedingung (301) für die Berechnung des Verhaltenstrends der Vorrichtung,
- Berechnen (302) eines Verhaltenstrends der Vorrichtung in Abhängigkeit von zumindest einem Messergebnis, das aus Iterationen, vor der Erfüllung der Bedingung (301) für die Berechnung des Verhaltenstrends der Vorrichtung, der Schritte des Lesens und des Speicherns abgeleitet wurde, und
- Erzeugen (304) einer Warndatei in Abhängigkeit von dem ermittelten Trend des Verhaltens der Vorrichtung.

5. Verfahren nach Anspruch 4, wobei die Bedingung für die Berechnung des Verhaltenstrends der Vorrichtung eine Frequenz des Startens des Schrittes der Berechnung (302) eines Verhaltenstrends der Vorrichtung betrifft.

6. Verfahren nach Anspruch 4, wobei die Bedingung für die Berechnung des Verhaltenstrends der Vorrichtung eine Anzahl von gelesenen und gespeicherten Messergebnissen betrifft.

7. Verfahren nach einem der Ansprüche 4 bis 6, das ferner einen Schritt (303) der Ermittlung einer Überschreitung von Schwellwerten durch die von der Datei mit Messergebnissen erhaltenen Messwerte umfasst.

8. Verfahren nach einem der vorstehenden Ansprüche, das ferner einen Schritt des Aktualisierens (207) der Bedingung für das Starten der Berechnung des Verhaltenstrends der IT-Architektur umfasst.

9. Verfahren nach einem der Ansprüche 4 bis 8, wobei das Berechnen (302) des Verhaltenstrends der Vorrichtung das Vergleichen des mindestens einen Messergebnisses mit einem Schwellenwert für die Ermittlung des Trends umfasst.

10. Verfahren nach Anspruch 9, wobei der Schwellenwert für die Ermittlung des Trends eine Anzahl von Fehlermeldungen betrifft, die in mindestens einem Messergebnis enthalten sind, das aus den Iterationen abgeleitet wurde.

11. Verfahren nach einem der vorstehenden Ansprüche, wobei das Überprüfen der ersten Bedingung für das Starten der Berechnung des Verhaltenstrends der Architektur während des Prüfverfahrens in regelmäßigen Abständen gestartet wird.

12. Verfahren nach einem der vorstehenden Ansprüche, wobei in dem Fall, dass die erste Bedingung für das Starten der Berechnung des Verhaltenstrends der Architektur nicht erfüllt wird, das Verfahren wiederholt wird, bis die Bedingung erfüllt ist.

13. Verfahren nach einem der Ansprüche 4 bis 12, **dadurch gekennzeichnet, dass** das mindestens eine Messergebnis ausgewählt werden kann aus: durchschnittliche Reaktionszeit der Vorrichtung je nach Art der gesendeten Anfrage, Standardabweichung der Reaktionszeiten, maximale Zeit, minimale Zeit, Zehntelwerte, Anzahl der bearbeiteten Anfragen, Anzahl der fehlgeschlagenen Anfragen und Anzahl der Fehlermeldungen.

14. Vorrichtung (40) zur Leistungsprüfung von IT-Infrastrukturen, umfassend eine automatisierte Überwachung der Leistungsmessung der IT-Architektur (10), wobei die IT-Architektur Vorrichtungen (17) umfasst, und umfassend eine Verarbeitungseinheit (42), die konfiguriert ist zum
- Installieren mindestens eines Warncomputerprogramms auf Vorrichtungen (17) der IT-Architektur (10),
- Starten einer Messung der Leistung der IT-Architektur (10), umfassend:
- Ausführen des Warncomputerprogramms auf den Vorrichtungen (17), auf denen das Warncomputerprogramm installiert wurde, und
- Erzeugen einer Warndatei auf zumindest einer der Vorrichtungen (17) durch das Warncomputerprogramm, wobei die Warndatei Daten in Bezug auf einen Trend des Verhaltens der Vorrichtung (17) umfasst,
- Überprüfen (204), ob eine erste Bedingung für das Starten der Berechnung des Verhaltenstrends der IT-Architektur (10) erfüllt ist,
und wenn die Antwort Ja ist:
- Überprüfen des Vorhandenseins von mindestens einer Warndatei, die Daten in Bezug auf einen Trend des Verhaltens der Vorrichtung umfasst, bei Vorrichtungen (17), auf denen das Warncomputerprogramm installiert wurde,
- Vergleichen der Anzahl der Warndateien mit einem Auslöseschwellenwert für die Berechnung des Verhaltenstrends der IT-Architektur (10),
wenn der Auslöseschwellenwert erreicht ist:
- Durchführen einer ersten Berechnung des Verhaltenstrends der IT-Architektur (10), in Abhängigkeit von den Daten in Bezug auf einen Trend des Verhaltens der Vorrichtung (17), die in der mindestens einen der Warndateien enthalten sind, die auf den Vorrichtungen (17) der IT-Architektur vorhanden ist, und
- Erzeugen einer Warnmeldung in Abhängigkeit von dem ermittelten Trend des Verhaltens der IT Architektur (10), um einen Benutzer zu informieren.

15. System zur Leistungsprüfung von IT-Infrastrukturen, umfassend eine automatisierte Überwachung der Leistungsmessung der IT-Architektur, die eine Vorrichtung nach Anspruch 14 und mindestens eine Vorrichtung (17) der IT-Architektur umfasst, die eine Verarbeitungseinheit umfasst, die für die Ausführung des Computerprogramms und die Durchführung der folgenden Schritte konfiguriert ist:
- iteratives Lesen und Speichern von zumindest einem Messergebnis in Bezug auf mindestens eine von der Vorrichtung ausgeführte Anfrage während der Leistungsmessung, die von einer Messergebnisdatei aus gestartet wird,
- Überprüfen einer Bedingung für die Berechnung des Verhaltenstrends der Vorrichtung,
- Berechnen eines Verhaltenstrends der Vorrichtung in Abhängigkeit von zumindest einem Messergebnis, das aus Iterationen, vor der Erfüllung der Bedingung für die Berechnung des Verhaltenstrends der Vorrichtung, der Schritte des Lesens und des Speicherns abgeleitet wurde, und
- Erzeugen einer Warndatei in Abhängigkeit von dem ermittelten Trend des Verhaltens der Vorrichtung.

## Claims

1. A method for testing the performance of computing infrastructures including automated monitoring of computing architecture performance measurement (10), the computing architecture (10) comprising devices (17), said method including the following steps:
- of installation (202), by an injecting device, of at least one computer warning program on devices (17) of said computing architecture (10);
- of launching a performance measurement of said computing architecture (10) comprising:
- a step of execution (203) of the computer warning program on the devices (17) whereon the computer warning program has been installed, and
- a step of generation of a warning file on at least one of said devices (17), by the computer warning program, said warning file comprising data relating to a behaviour tendency of the device (17),
- of verification (204) if a first condition for launching the computing of the behaviour tendency of the computing architecture (10) is fulfilled,
if the response is yes:
- of verification (205) of the presence of at least one warning file including data relating to a behaviour tendency of the device, on devices (17) whereon the computer warning program has been installed,
- of comparison (206) of the number of warning files with a threshold of triggering the computing of the behaviour tendency of the computing architecture (10),
if the triggering threshold is reached:
- of the first computing (208) of the behaviour tendency of said computing architecture (10), according to the data relating to a behaviour tendency of the device (17) comprised in at least one warning file present on the devices (17) of said computing architecture (10), and
- of generation (209) of a warning message according to said behaviour tendency of the determined computing architecture (10), for informing a user.

2. A method according to claim 1, wherein said first condition for launching the computing of the behaviour tendency of the architecture is relative to a launching frequency of said step of first computing (208).

3. A method according to any of the preceding claims, further including a step of stopping said performance measurement in progress, said stopping step including sending stop messages to the devices (17) of the computing architecture (10) implementing the computer warning programs.

4. The method according to any of the preceding claims, wherein said computer warning program includes instructions for implementing the following steps, when it is executed by a device (17) of said computing architecture (10):
- iterative reading and storage of at least one measurement result relative to at least one request executed by said device (17) during said performance measurement launched based on a measurement result file,
- verifying a condition (301) for computing a behaviour tendency of said device,
- computing (302) a behaviour tendency of said device, according to at least one measurement result originating from iterations, prior to the making of said condition (301) for computing the behaviour tendency of said device, of said reading and storage steps, and
- generating (304) a warning file according to said behaviour tendency of the determined device.

5. The method according to claim 4, wherein said condition for computing the behaviour tendency of said device is relative to a frequency of launching said step of computation (302) of a behaviour tendency of said device.

6. The method according to claim 4, wherein said condition for computing a behaviour tendency of said device is relative to a number of read and stored measurement results.

7. The method according to any of claims 4 to 6, further comprising a step (303) of determining an overflow of threshold values by the measurements obtained from the measurement result file.

8. The method according to any of the preceding claims, further including a step of updating (207) the condition for launching the computing of the behaviour tendency of the computing architecture.

9. The method according to any of claims 4 to 8, wherein said computation (302) of the behaviour tendency of the device includes the comparison of said at least one measurement result with a tendency determination threshold.

10. The method according to claim 9, wherein said tendency determination threshold is relative to a number of error messages contained in at least one measurement result originating from said iterations.

11. The method according to any of the preceding claims, wherein the verification of the first condition for launching the computing of the behaviour tendency of the architecture is launched at regular intervals during the test method.

12. The method according to any of the preceding claims, if the first condition for launching the computing of the behaviour tendency of the architecture is not fulfilled, the method loops back until the condition is met.

13. The method according to any of claims 4 to 12, **characterised in that** at least one measurement result can be selected from among: the mean response time of the device according to each type of request sent, the standard deviation of response times, the maximum time, the minimum time, the deciles, the number of processed requests, the number of failed requests, and the number of error messages.

14. A device (40) for testing the performance of computing infrastructures including automated monitoring of computing architecture performance measurement (10), the computing architecture comprising devices (17) and including a processing unit (42) configured to:
- Install at least one computer warning program on devices (17) of said computing architecture (10),
- Launch a performance measurement of said computing architecture (10), comprising:
- the execution of the computer warning program on the devices (17) whereon the computer warning program has been installed, and
- the generation of a warning file on at least one of said devices (17), by the computer warning program, said warning file comprising data relating to a behaviour tendency of said device (17),
- Verifying (204) if a first condition for launching the computing of the behaviour tendency of the computing architecture (10) is fulfilled,
and if the response is yes:
- Verifying the presence of at least one warning file including data relating to a behaviour tendency of the device, on devices (17) whereon the computer warning program has been installed,
- Comparing the number of warning files with a threshold for triggering the computation of the behaviour tendency of the computing architecture (10), if the triggering threshold is reached:
- Carrying out a first computation of the behaviour tendency of said computing architecture (10), according to the data relating to a behaviour tendency of the device (17) comprised in at least one of said warning files present on the devices (17) of said computing architecture, and
- Generating a warning message according to said behaviour tendency of the determined computing architecture (10), for informing a user.

15. A system for testing the performance of computing infrastructures including automated monitoring of computing architecture performance measurement including a device according to claim 14 and at least a computing architecture device (17) including a processing unit configured to execute said computer program and implement the following steps of:
- iterative reading and storage of at least one measurement result relative to at least one request executed by said device during said performance measurement launched based on a measurement result file,
- verification of a condition for computing the behaviour tendency of said device,
- computation of a behaviour tendency of said device, according to at least one measurement result generated from iterations, prior to making said condition for computing the behaviour tendency of said device, of said reading and storage steps, and
- generation of a warning file according to said behaviour tendency of the determined device.
